# EUROPEAN PATENT SPECIFICATION

(11) **EP 3 380 397 B1**
(45) Date of publication and mention of the grant of the patent: **19.07.2023**
(21) Application number: 16867252.5
(22) Date of filing: 18.11.2016
(51) Int. Cl.: B64C 15/12, B64C 39/02, B64D 31/06

(54) **GIMBALED THRUSTER CONFIGURATION FOR USE WITH UNMANNED AERIAL VEHICLE**
KARDANISCHE STRAHLRUDERANORDNUNG ZUR VERWENDUNG MIT UNBEMANNTEN LUFTFAHRZEUGEN
CONFIGURATION DE PROPULSEUR À CARDAN POUR UTILISATION AVEC UN VÉHICULE AÉRIEN SANS PILOTE

(30) Priority: 20.11.2015 US 201562258145 P
(43) Date of publication of application: 03.10.2018
(73) Proprietor: Flightwave Aerospace Systems, Santa Monica, California 90403 (US)
(72) Inventor: LUKACZYK, Trent, Santa Monica, California 90401 (US); COLONNO, Michael, Santa Monica, California 90401 (US)
(74) Representative: Atout PI Laplace
(86) International application number: PCT/US2016/062843
(87) International publication number: WO 2017/087841

(56) References cited:
- CA-A1- 2 693 672
- KR-A- 20140 034 370
- US-A1- 2010 140 415
- US-A1- 2013 105 620
- US-A1- 2013 105 620
- US-A1- 2013 105 635
- US-A1- 2013 105 635
- US-B1- 6 719 244
- US-B1- 6 719 244

## Description

### Cross-Reference to Prior Applications

This application claims the benefit from U.S. Provisional Application No. 62/258,145 filed on November 20, 2015.

### Technical Field

The disclosure is related to a thruster configuration for use with an aerial vehicle. More particularly, the disclosure is related to a gimbaled thruster configuration for use with an unmanned aerial vehicle and a method for vectored thrust control.

### Background

Unmanned Aerial Vehicles (UAVs) are typically flown based on two different flight modes. The first is a multi-rotor flight mode that uses multiple lifting propellers to hover or take off and land vertically by providing generally vertical thrust. The second is a traditional fixed-wing flight mode that uses a large span aerodynamic lifting surface that uses generally horizontal thrust. The multi-rotor flight mode benefits from being easy to launch and land, but it has poor endurance due in part to higher energy consumption. The fixed-wing flight mode is beneficial due to its endurance as a result of lower energy consumption, but it is more difficult to launch and land. There is a new class of "hybrid" aerodynamic vehicles that blend the two strategies to take advantage of their positive attributes.

One hybrid aerodynamic flight strategy is known as a "tilt-rotor", where thrusters are able to rotate to accommodate different flight modes. In the first vertical flight mode, the thrusters point upwards providing vertical thrust in order to fly like a multi-rotor. In the second horizontal flight mode, the thrusters point forward to provide horizontal thrust in order to fly like a fixed-wing aircraft. In each flight mode, the tilting action of the thrusters can be further used to enable greater control. For example a thruster in the vertical flight mode can be slightly tilted forward or aft to control forward and backward motions.

UAV tilt-rotor mechanisms are difficult to build because they must be tiltable over a large range of motion, while also being durable, light, and consuming minimal power. Some prior art attempts to overcome this required numerous small parts, making them heavy, increasing cost, increasing manufacturing complexity, increasing potential for failure, and the like. On the other hand, some prior art attempts that focused on being durable failed because of high power consumption. Additionally, some prior approaches also failed due to the high torque loads various components were exposed to resulting in either over-engineered heavy structures or component failure.
CA2693672A1 relates to a propulsion and steering system for use with an airship. The airship possesses a hull having an outer envelope.
The propulsion and steering system includes at least one propulsion and steering assembly. The assembly includes an engine for producing thrust to propel the airship and a support frame for carrying the engine. The engine is fixed to the support frame. A support frame movement mechanism is operable to move the support frame relative to the hull to thereby allow the engine and the thrust produced by the engine to be oriented in a desired direction. The assembly further includes spacer means connected to the support frame movement mechanism for spacing the support frame and the engine from the outer envelope of the hull so as to create sufficient clearance therebetween when the support frame is moved. Also provided is a mounting framework for attaching the spacer means to the hull.
US6719244B1 relates to improvements with regards to the control of VTOL aircraft that use two propellers or fans as the primary lifting devices in hover. More particularly, the invention is a means for effecting control of the aircraft using just the two propellers alone, and comprises the in-flight tilting of them-which are of the conventional, non-articulated type (though they may have collective blade-pitch)-directly and equally towards or away from one another (and therefore about parallel axes) as necessary for the generation of propeller torque-induced and gyroscopic control moments on the aircraft about an axis perpendicular to the propeller tilt and mean-spin-axes. For a side-by-side propeller arrangement, therefore, their (lateral) tilting towards or away from one another produces aircraft pitch control moments for full control of the aircraft in that direction. Unlike the prior art, no cyclic blade-pitch control, slipstream-deflecting vanes, exhaust nozzles, tail rotors or extra propellers or fans, or conventional control surfaces are needed to effect this aircraft pitch control.
KR20140034370A provides an unmanned aerial vehicle comprising a body with internal driving equipment for driving the unmanned aerial vehicle; a frame part as the framework of the unmanned aerial vehicle to support the body; left and right blade propeller part on the frame part to provide propulsion for flying; and a tail propeller joined to the frame part to be tilted to provide propulsion for flying.
US20130105635A1 provides a system control the stability and direction of a quad tilt vertical takeoff and landing (VTOL) unmanned aerial vehicle (UAV) by manipulating the rotational speed of propellers at each rotor while simultaneously tilting the rotors in a 45 degree configuration related to a central axis for directional control. Each rotor is attached to a tilting mechanism configured to be symmetrically aligned at a 45 degree angle from a central axis to manipulate a directional angle of each rotor along a first and second axis. The first and fourth rotors are aligned on the first axis while the second and third rotors are aligned on the second axis. A controller includes a first control loop for manipulating the rotational speed of the propellers to control the aircraft balance and a second control loop for controlling lateral movement by tilting the rotors along the first and second axis.
US2013/105620 describes a system for increasing the thrust and power capabilities of a side by side vertical takeoff and landing vehicle and to optimize the coaxial rotor performance. The system including a first coaxial rotor spaced from an aircraft body and a second coaxial rotor spaced from the aircraft body and opposite the first coaxial rotor. The first coaxial rotor having a first top propeller aligned with a first bottom propeller along a first rotational axis. The second coaxial rotor having a second top propeller aligned with a second bottom propeller along a second rotational axis. A gyroscopic moment to maintain pitch stability is controlled by modulating the first and second top propellers having a different angular speed or different torque from the first and second bottom propellers and tilting the first and second coaxial rotors towards the central axis with a common tilt angle and a common tilt rate.

Other prior art approaches in the field offer no alternative to utilizing gears and other components to allow for a greater degree of rotation of the servo. In some prior art approaches, a connecting linkage restricts the servo motion to a mere 90 degrees of rotation. In other prior art approaches, an aerial vehicle that separates a load bearing aspect of the vehicle from the servo system became an unfavorable limitation. Further, these added connecting linkage gears and components are prone to fail, break, or stress-out.

Many of these and other shortcomings of the prior art are addressed by the various aspects in the present disclosure.

### Summary of the Disclosure

A vectored thrust control module according to independent claim 1 is provided, with preferred embodiments being defined in the dependent claims.

### Brief Description of the Drawings

FIG. 1 illustrates a gimbaled thruster in accordance with aspects of the present disclosure.
FIG. 2A illustrates an exploded view of the gimbaled thruster of FIG. 1.
FIG. 2B illustrates a diagram of the electrical components and wire system in accordance with aspects of the present disclosure.
FIG. 3A illustrates a cross-sectional view of the gimbaled thruster of FIGS. 1 and 2 in accordance with aspects of the present disclosure.
FIG. 3B illustrates a side view of the gimbaled thruster of FIGS. 1 and 2 in accordance with aspects of the present disclosure.
FIGS. 4, 5, 6, and 7 illustrate various opposed titling angles about an axis line of a gimbaled thruster in accordance with aspects of the present disclosure.
FIG. 8 illustrates a construction of an output shaft adapter for a gimbaled thruster, which does not fall within the scope of the claims.
FIG. 9 illustrates an exploded view of the gimbaled thruster of FIG. 9.
FIG. 10 illustrates a construction of an output shaft adapter for a gimbaled thruster in accordance with aspects of the present disclosure.
FIG. 11 illustrates an exploded view of the gimbaled thruster of FIG. 10.
FIG. 12 illustrates a construction of an output shaft adapter for a gimbaled thruster.
FIG. 13A illustrates an exploded view of the gimbaled thruster of FIG. 12.
FIG. 13B illustrates a cross-sectional view of the gimbaled thruster of FIG. 12.
FIG. 14 illustrates an aspect of a gimbaled thruster primary aircraft interface construction.
FIG. 15 illustrates an exploded view of the gimbaled thruster of FIG. 14.
FIG. 16 illustrates a side view of the gimbaled thruster of FIGS. 13 and 14.
FIGS. 17, 18, and 19 illustrate various opposed titling angles about an axis line of a gimbaled thruster.
FIG. 20 illustrates a gimbaled thruster.
FIG. 21 illustrates an exploded view of the gimbaled thruster of FIG. 20.
FIG. 22 illustrates an aspect of a gimbaled thruster with a tilt shaft implementation connecting two primary structural arms in accordance with similar aspects of FIGS. 20 and 21.
FIG. 23 illustrates an exploded view of the tilt locking mechanism of FIG. 22.
FIGS. 24, 25, and 26 illustrate various opposed titling angles about an axis line of the gimbaled thruster of FIG. 20.
FIG. 27 illustrates a tilt locking mechanism in a locked position for use with a gimbaled thruster.
FIG. 28 illustrates an exploded view of the tilt locking mechanism of FIG. 25A.
FIGS. 29 and 30 illustrate side-views of the internal components and details of the tilt locking mechanism.

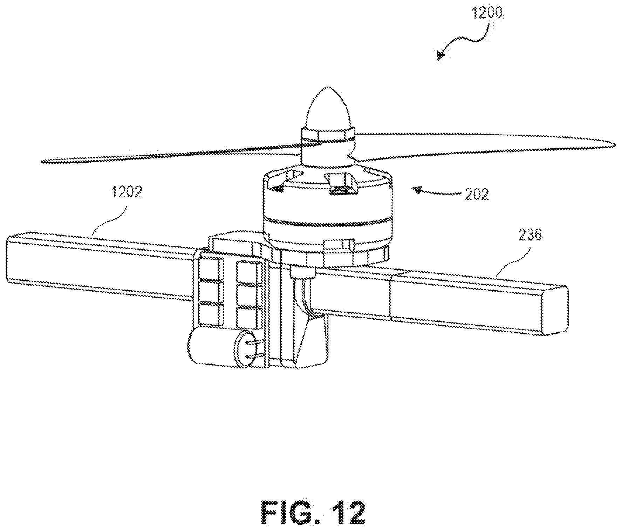

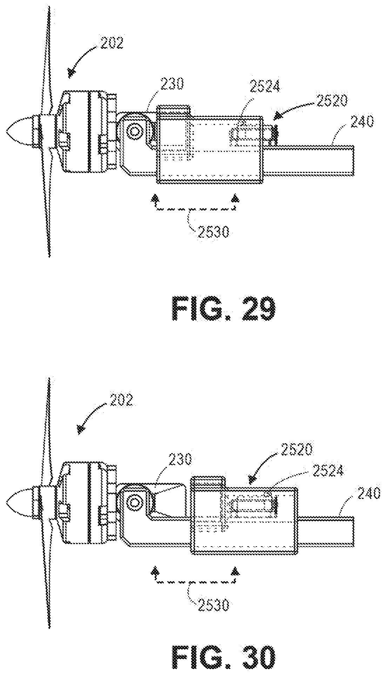

FIG. 12-30 do not fall within the scope of the claims.

### Detailed Description

The disclosure provides a construction and a method for constructing a UAV tilt-rotor mechanism hereinafter referred to as a "gimbaled thruster". The construction detailed by the disclosure enables a large range of tilting motion by directly connecting a rotary "servo" to both a thrusting device and a primary structure component of the vehicle. Servos are traditionally available in the UAV industry for controlling aerodynamic surfaces and can be built durably for example with multiple bearings and metal gears. The thrusting device or assembly can use a number of implementations, for example a motor driven propeller, a motor driven ducted fan, and the like.

In order to minimize stress in joining parts, and power consumption of the servo, a line of thrust of the thrusting device may be aligned with a hinge point of the servo. Further, this alignment of the line of thrust or center axis location of the thrusting assembly is beneficial because it reduces the lateral and longitudinal torques that an associated connection has to carry. This source of torques in prior art implementations is a recognized problem in the industry. The disclosure seeks to solve this problem, despite combining the load bearing part and servo driving part of the mechanism, by taking advantage of traditional servo construction topologies, for example utilizing servos that include bearings capable of carrying these torques and radial loads.

Several aspects of this method are set forth in the disclosure provided below. One aspect of the disclosure that ties the method and configuration together is a coupling of the servo directly to the aircraft structure and the thrusting device. In this regard, one aspect of the disclosure includes minimizing or removing parts between the servo and the motor such that the servo acts as the rotating body itself. Unlike some prior art, aspects of the disclosure have no control linkage restricting the motion of the servo or other gimbaling components to 90 degrees.

One advantage of the gimbaled thruster construction described by the disclosure is that it advances a holistic performance of a tilt-rotor mechanism. Aspects of the disclosure enable a novel larger range of tilting motion through the drive of a servo system while eliminating many small parts that can compromise durability and add weight. An aspect of the disclosure further optimally aligns the forces of the mechanism to further increase durability and reduce power consumption.

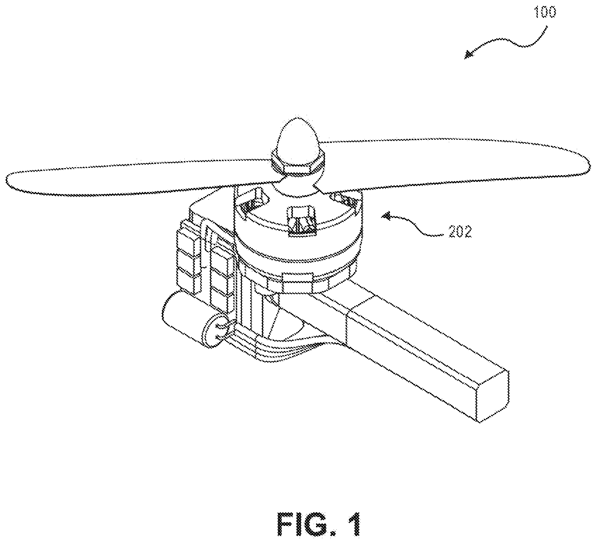

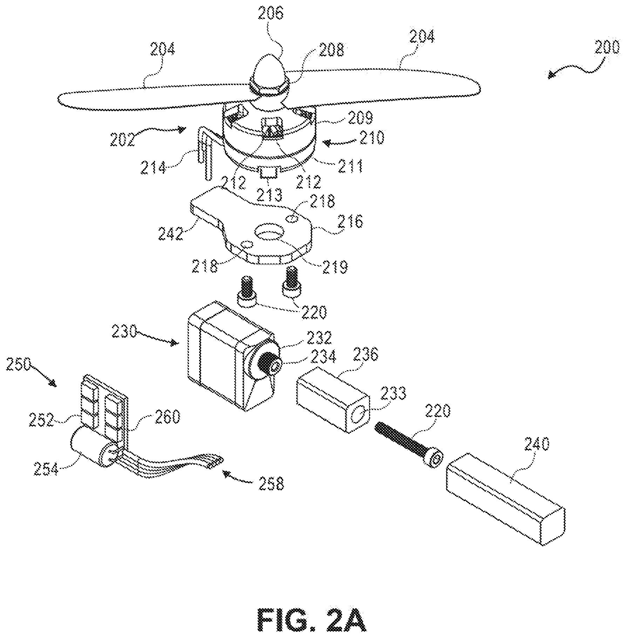

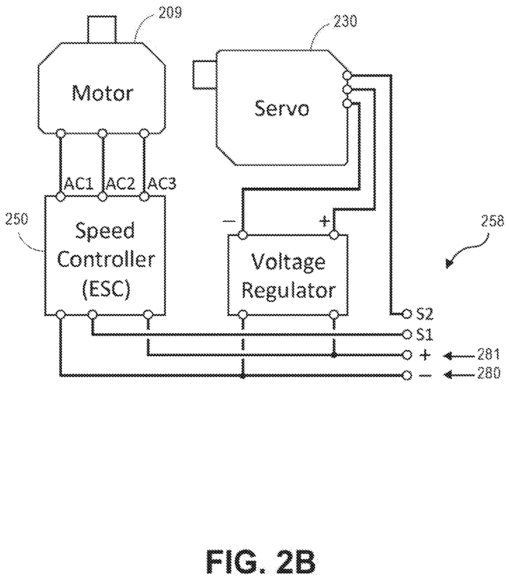

Now referring to the drawings, wherein like reference numbers refer to like elements, FIG. 1 illustrates an aspect of gimbaled thruster 100 in accordance with aspects of the present disclosure. FIG. 2 illustrates an exploded view 200 of the gimbaled thruster 100 of FIG. 1. In an exemplary aspect, the gimbaled thruster 100 may embody a vectored thrust control module coupled to an aircraft, unmanned aerial vehicle, or the like for use in horizontal-to-vertical take-off and flight, such as take-off from a landing pad, other locations having little to no runway, or the like.

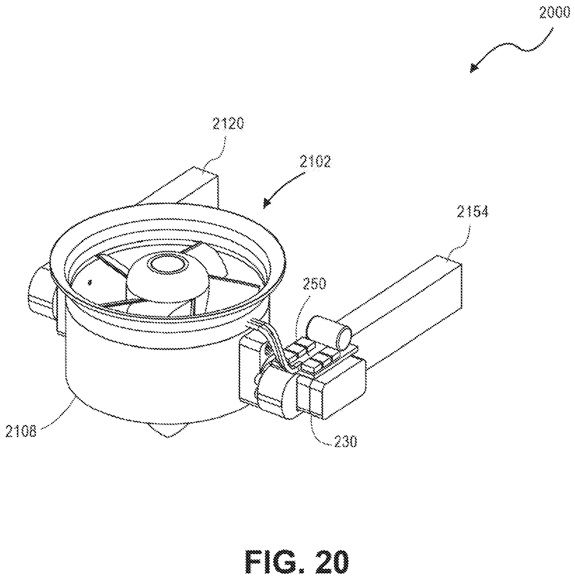

The gimbaled thruster 100 includes a thrust motor assembly 202 that includes at least one bladed component or propeller 204, a motor 209, and a motor hub 210. The thrust motor assembly 202 is coupled to a servo system 230 that in turn is attached to an interface adapter 236 configured for attachment to an aircraft structure 240. Although FIGS. 1 and 2 illustrate at least one propeller 204, the disclosure contemplates that the at least one propeller 204 may also be implemented with multiple propellers 204, multiple counter-rotating propellers 204, a ducted fan (see FIG. 20), and like bladed components.

The thrust motor assembly 202 may be assembled into one self-contained and integrated assembly. The motor 209 and the motor hub 210 may be configured to be capable of rotation and may be attached to a motor base assembly 211. The motor 209 of the thrust motor assembly 202 may be configured to include a rotor, winding, commutator, motor stator windings 212, and the like. The thrust motor assembly 202 may be configured to rotate the motor 209 and the motor 209 rotates at least one but possibly up to four or more propellers 204, or other bladed components, so that the propeller 204 pushes air and generates thrust.

The at least one propeller 204 may be coupled to a motor shaft 213 of the thrust motor assembly 202 by a fastener 206, such as a hex nut 208. Alternatively the at least one propeller 204 might use other types of fastening means such as multiple bolts and the like. Alternatively, the propeller 204 may be coupled to the motor 209 in a quick fastening construction that may include a push and lock-and-turn, or a self-locking assembly that locks the at least one propeller 204 to the motor shaft 213. In yet another aspect, the at least one propeller 204 may be manufactured with the motor shaft 213 embedded therein by over-molding or the like.

The thrust motor assembly 202 may include at least two power wires 214 that connect to the motor 209 of the thrust motor assembly 202 to provide power and control, or with implementations that include at least three sets of coils arranged in the motor 209 of the thrust motor assembly 202. The coils may be driven by a motor speed controller 250 discussed below. The assembly can be manufactured by any suitable process such as, but not limited to, machining, molding, an extrusion process, an additive process and/or the like.

Further, the motor base assembly 211 may connect to a motor mounting adapter plate 216. In one aspect, the motor mounting adapter plate 216 may be configured to accept a motor shaft 213 of the thrust motor assembly 202. The motor mounting adapter plate 216 may include at least one hole 218, 219 or bore to accept at least one fastener 220, such as a bolt, to hold, connect, and stabilize the thrust motor assembly 202. A central hole 219 may act as a clearance hole so that a motor shaft 213 and a retaining clip on the thrust motor assembly 202 may sit far below a surface of the motor mounting adapter plate 216 so that there is no interference with the motor mounting adapter plate 216. Importantly, a direct integration of the motor mounting adapter plate 216 to the motor base assembly 211 affords a greater range of motion to the overall assembly.

In another contemplated aspect, the motor base assembly 211 couples directly with a servo housing 232 that fully integrates the motor shaft receptacle functionality of a motor mounting adapter plate 216. This direct coupling with an integrated servo housing 232, by removing the step of a mounting plate, removes a potential failure point and increases manufacturing capabilities.

An adhesive 242, for example glue, may be utilized to rigidly connect the motor mounting adapter plate 216 with the servo system 230. In one aspect, the adhesive 242 detachably connects the motor mounting adapter plate 216 to the servo system 230. In another aspect, the servo system 230 and the motor mounting adapter plate 216 are formed as one undetachable unit. A means to self-cool the system in flight, for example when the servo is operational, may involve a specific configuration and/or composition of the adhesive 242. The adhesive 242 may connect the servo system 230 with the motor speed controller 250. The adhesive 242 may need to withstand heat being produced and released by both the servo system 230 and the motor speed controller 250. When the motor speed controller 250 is attached directly to the servo system 230, the adhesive 242 may be a heat conductive adhesive or glue that may need to be not temperature sensitive, to use the servo housing 232 as an additional heat dissipating surface.

The servo system 230 may include a motor, a travel sensor configured to communicate to the motor how far to tilt or travel forward and backward, a gear train, an electronic controller, a housing, and the like. An aft end of the servo housing 232 may include a servo output shaft 234, a mating frame receptacle 233 for the servo output shaft 234, and the interface adapter 236. The servo output shaft 234 may connect with the interface adapter 236 that acts as a variable connection point with an aircraft structure interface. These serve to allow for any type of contemplated mounting to an aircraft structure 240. In configurations especially useful to this aspect, the servo system 230 may also include one or more bearings or pivots. The bearings/pivots in the servo system 230 may be configured to withstand high amounts of torque during take-off and flight. This disclosure specifically contemplates a novel approach to combining and arranging the load bearing and servo driving aspects of an unmanned aerial vehicle.

The servo of the servo system 230 may include the interface adapter 236 with a countersunk hole that accepts the servo output shaft 234 so as to provide a sealed and/or rigid connection. Further, a hole may be arranged on an opposite end of the interface adapter 236 to accept at least one fastener 220, such as a bolt, which may also be countersunk. Such a contemplated connection may functionally allow for absorption of torque and moments, as well as make a more rigid connection with the servo system 230 components and a servo housing 232. This type of connection makes any interface for the servo system 230 with the aircraft structure 240 much more rigid.

The dimensional length of the output shaft adapter may be constructed in proportion to a dimensional length of the propeller 204 so to not interfere. The disclosed construction of the interface adapter 236 is beneficial because it allows for connection with the at least one fastener 220 to hold the servo system 230 and attach it to the aircraft structure 240, for example, into a piece of wood associated with the aircraft structure 240.

The servo system 230 may be powered and controlled through a wire assembly connection 258 that connects the servo system 230 to a motor speed controller 250. The motor speed controller 250 may be configured to control the vectored thrust control and power of the servo via an associated attached or integrated power conditioning circuit 260, as well as control the motor 209 and speed associated with the servo system 230. Any contemplated configuration of the wire assembly connection 258 is configured to rotate with the assembly through any degree of rotation. The motor speed controller 250 or electronic speed control (ESC) may also include a motor speed control circuit board or associated integrated power conditioning circuit 260. ESC components 252 may include a voltage regulator, a capacitor 254, and the like and those components may be arranged on the tilting assembly. The voltage regulator may be integrated with the ESC or alternatively may be a separate component.

FIG. 2A (as well as referencing FIG. 2B) illustrates a diagram of certain electrical components and a wire system of the vehicle in accordance with aspects of the present disclosure. Such circuitry may be utilized to control the operation of desired speeds and flight modes. In one aspect the wire assembly connection 258 may include two wires dedicated to connecting to and providing power to the servo system 230 through a positive power wire and negative power wire. The wire assembly connection 258 may include a third wire S1 configured as a signal wire to communicate to the motor speed controller 250, such as how fast to command the motor speed. The wire assembly connection 258 may include a fourth wire configured as a signal wire S2 for the servo to command the servo system 230 by how much to tilt, gimbal and turn for a vertical flight mode, horizontal flight mode, a transitional flight mode or the like.

Specifically referencing FIG. 2A, the ESC may include input terminals and output terminals. Two power wires, a positive and negative power wire 280, 281, may connect from the motor speed controller 250 to the servo system 230 and a voltage regulator. These power wires supply and power the voltage regulator and ESC or the motor speed controller 250. The ESC converts that power input into an alternating current which is transmitted to the motor over three wires, AC1, AC2, AC3. The motor thus may have a 3-phase driving signal generated by the motor speed controller 250. To control the signals to the motor, the S1 terminal provides an oscillating and pulse signal to communicate to the ESC how fast to operate the motor 209. A high voltage output command may operate the motor faster, and a low voltage output command may operate the motor slower. A separately commanded signal is fed through S2 which commands the servo system 230 to a particular degree of rotation of tilt during flight. By varying the width of the signal, an autopilot algorithm feature can command various tilt angles of the servo through 180 degrees of motion. It is further contemplated that the system electrical energy is scalable, for example contemplating electrical energy from 50-100W or even to 1000W.

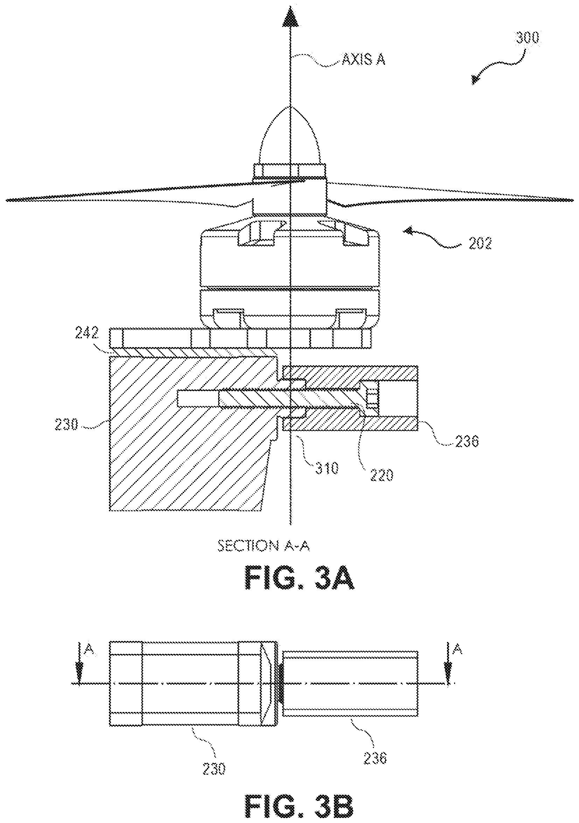

FIG. 3A illustrates a cross section view of the servo shaft mounting 300. Specifically, a center axis thrust line, represented by axis A, of the thrust motor assembly 202 is in close proximity to the hinge or joint 310 of the interface adapter 236 and the servo output shaft 234. Minimizing a moment and torque on an aerial structure is beneficial to a longevity and a durability of the aircraft. This disclosure contemplates a beneficial placement of a center axis of the thrust line of the thrust motor assembly 202 to minimize extraneous torques carried across the joint 310 or hinge. The axis of the thrust line may be located near or at a center of the assembly to withstand high torque loads. Also extraneous torque may be absorbed through a sufficiently long bolt shaft retained in the frame member. Also extraneous torque may be absorbed through strategic placement of the hinge point and thrust line, represented by axis A. The axis of the thrust line acts as a line of action between two load-bearing pivots and is further aligned with a natural hinge point or the joint 310 of the servo or may be located at a pivot line between two load-bearing pivot points. In one aspect, the axis of the thrust line may be located at a pivot line of servo load-bearing aspect of the aerial vehicle.

In another aspect, there may be two bearings/pivots housed inside the servo system. Unlike some prior art approaches, the contemplated aerial structure can utilize those pivot points already existing as the servo system becomes a loadbearing aspect of the disclosure. This configuration may further enable a range of motion of the servo system 230 such that the aerial vehicle can rotate in small rotation intervals as well as uniquely handle larger rotations. Small rotations, for example, contemplate a 0-20 degree rotation, while larger rotation includes a rotation capable of 180 degrees rotation or as limited by the mechanical limits of the servo.

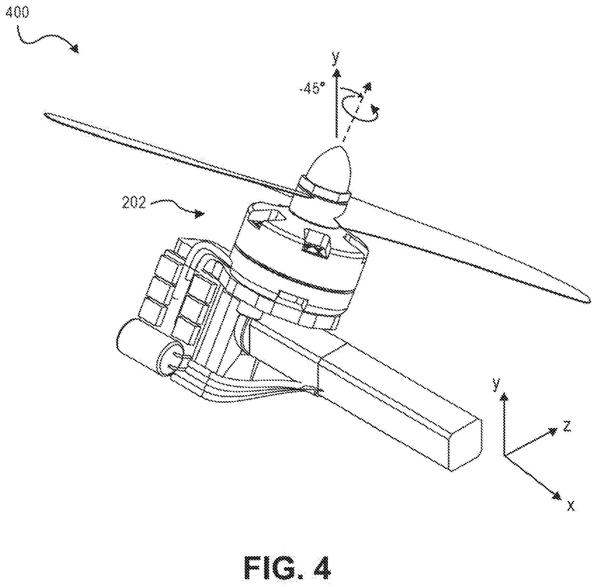

FIGs. 4-7 illustrate the opposed titling about an axis line of a gimbaled thruster in accordance with aspects of the present disclosure. The aerial vehicle ultimately is capable of taking-off like a helicopter with no need for a runway. This disclosure distinguishes from prior art approaches in that the thrust motor assembly 202 is configured to tilt with a large range of motion. Historically a shortcoming with prior art approaches was that the servo was connected via a control linkage and that restricted motion to 90 degrees. However, the thrust motor assembly 202 of the disclosure can gimbal through at least a 90 degree rotation and up to 180 degree rotation, allowing for novel and precise control of desired small and large degrees of rotational motion.

There may be a microcontroller device (not pictured) that may be configured to send a modulation signal to command the thrust motor assembly 202 to orient to a desired flight mode position. The microcontroller device contemplates a control algorithmic logic that takes advantage of the improvements of this disclosure to seamlessly blend the two major flights states hover and forward flight with a transition state in between. During the transition state, an autopilot may command the servos to tilt the motors 209 partially forward to initiate forward flight, and when moving sufficiently fast, can command the servos to tilt fully forward to establish full forward flight. In one aspect, the autopilot may be implemented by a processor.

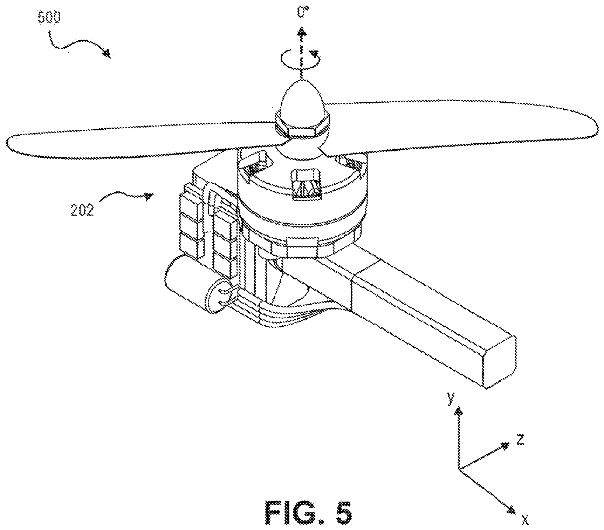

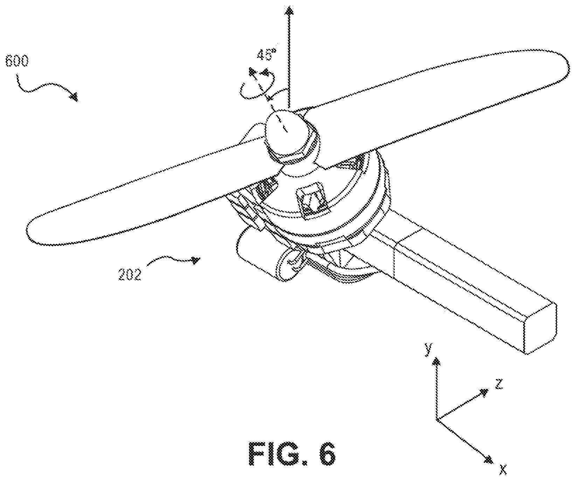

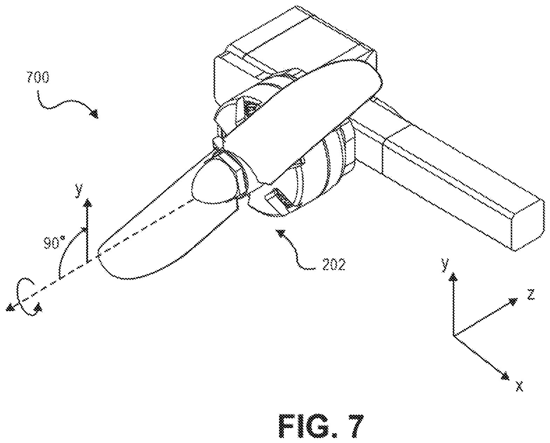

At a certain auto programmed altitude, or with pilot input, the vehicle may transition from horizontal flight mode to vertical flight mode, or vice versa. In the first vertical flight mode, the thrust motor assembly 202 points upwards providing vertical thrust in order to fly like a multi-rotor. In the second horizontal flight mode, the thrust motor assembly 202 points forward to provide horizontal thrust in order to fly like a fixed-wing aircraft. Employing an x-y-z axis into the plane of the drawings, FIG. 4 illustrates a gimbaled thruster tilted at -45 degrees as indicated by reference numeral 400. FIG. 5 illustrates a gimbaled thruster tilted pointing upwards at 0 degrees as indicated by reference numeral 500. FIG. 6 illustrates a gimbaled thruster tilted at +45 degrees as indicated by reference numeral 600. FIG. 7 illustrates a gimbaled thruster tilted at +90 degrees, pointed forward as indicated by reference 700. FIGS. 4-6 illustrate orientation before flight, i.e. during take-off and vertical lift. FIG. 7 illustrates an orientation during a horizontal flight mode. Other orientations are contemplated as well where thrusters are able to rotate to accommodate different flight modes.

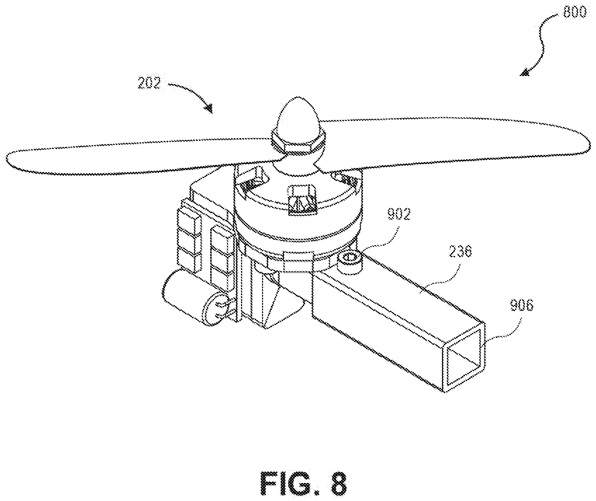

FIG. 8 illustrates a gimbaled thruster with another adapter interface construction in an operational configuration 800. In this aspect, a gimbaled thruster utilizes a shear pin mounting assembly or alternatively a snap-latch mounting method of assembly. Other types of assembly are contemplated as well.

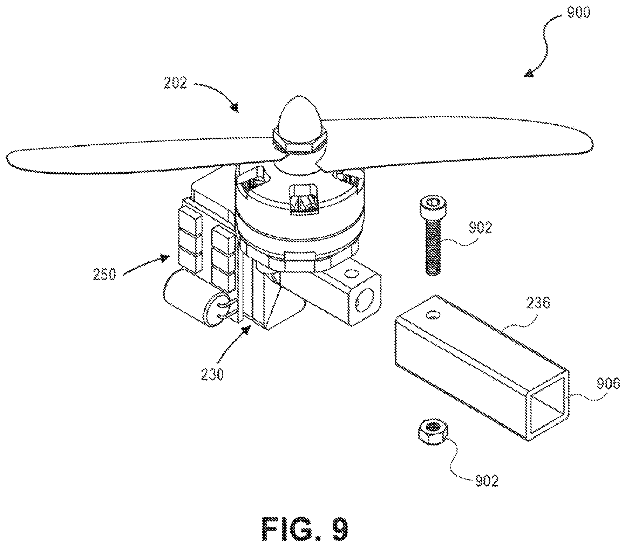

FIG. 9 illustrates an exploded view 900 of the gimbaled thruster of FIG 8. The interface adapter 236 may contain a bore or fastener hole that acts as a fastening means or snap latch for a primary aircraft interface 906. The snap latch retains an inserted aircraft structure part or a mating primary structure (not pictured) into a receptacle, much like an inner and outer tube fastening together. Alternatively, this construction inserts a frame receptacle into a mating primary aircraft interface 906 component and retains it in place via a fastener 902, for example a shear pin, bolt, or the like.

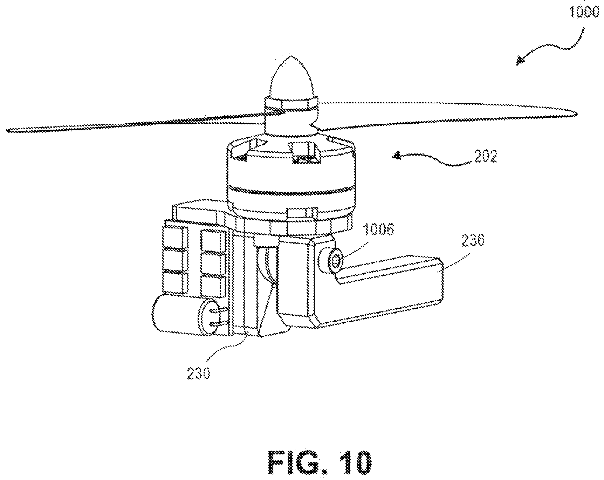

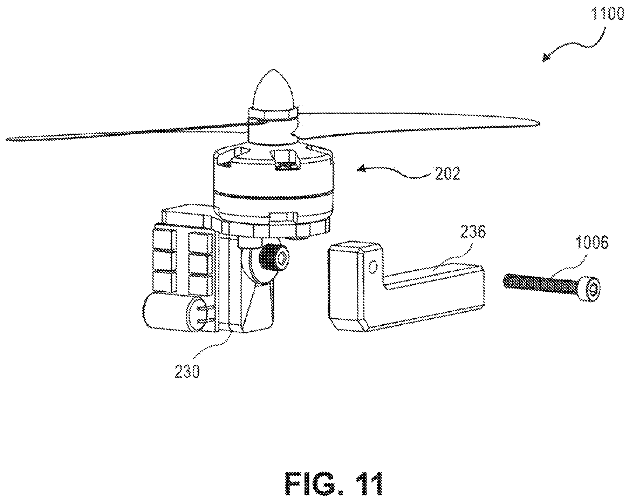

FIG. 10 illustrates an output shaft adapter for a gimbaled thruster in an operational configuration 1000. FIG. 11 illustrates an exploded view 1100 of the gimbaled thruster of FIG. 10. Referring to both FIGS. 10 and 11, the interface adapter 236 in this aspect is an L-shaped arm that connects with the servo system 230 with a mechanical fastener 1006. In effect, the interface adapter 236 raises a position of the servo system 230 up so that the propeller 204 can tilt further back before it interferes with the interface adapter 236. In this contemplated aspect, the interface adapter 236 departs the servo system 230 in the same plane that the motor 209 rotates. Functionally, if the thrust motor assembly 202 tilts back too far, the blades or propeller 204 would interfere with the interface adapter 236 of the aircraft structure 240. The direction that the L-shaped configuration of the interface adapter 236 is arranged mitigates a naturally occurring interference from a blade of the propeller 204.

Referencing FIGS. 1-11, in one contemplated aspect, any one of the operational configurations may be designed with an aerodynamic shaped shroud or fairing design shroud (not pictured) arranged around the servo system 230 that acts as an aerodynamic shield to the servo system 230, and as such, provides a reduced coefficient of drag so as to create a more clean flight path profile. In another contemplated aspect, any one of the operational configurations may be designed with an aerodynamic shaped shroud or fairing design shroud (not pictured) that acts as a shield to the thrust motor assembly 202, and as such that there is a reduced coefficient of drag so as to create a more clean flight path profile. In one aspect, the aerodynamic shaped shroud may be manufactured utilizing three-dimensional printing.

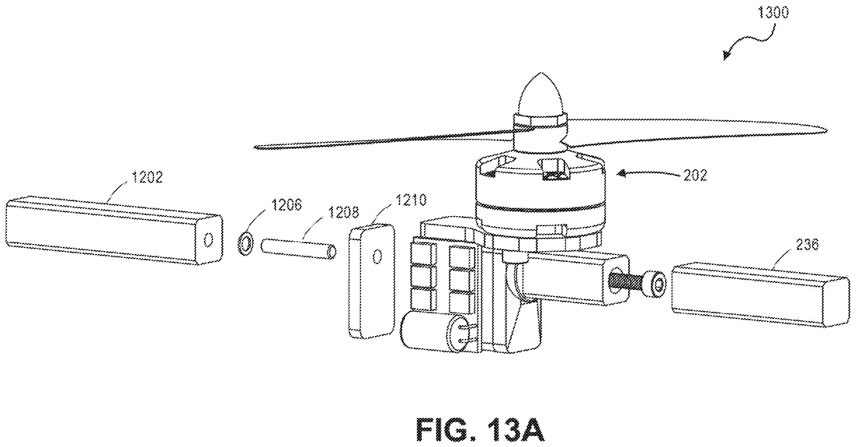

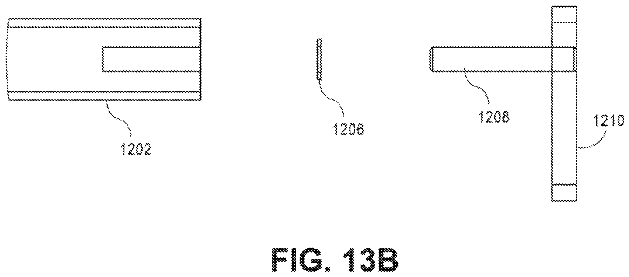

FIG. 12 illustrates a secondary shaft adapter 1202 (also referred to as an arm) for a gimbaled thruster with two mounting arms, as indicated by reference numerals 1200. FIGS. 13A and 13B further illustrate exploded and cross-sectional views 1300 of FIG. 12. A supporting arm may include a bearing and the secondary shaft adapter 1202 that may serve to carry the torque produced by the servo system 230. Functionally the thrust motor assembly 202 and the propeller 204 may prevent a cantilever situation with a secondary shaft adapter 1202 that may assist to provide balance and stability to the servo system 230. This construction further acts to prevent unwanted pivoting at various connection points on the structure.

A mounting plate 1210 may be adhesively attached to a bare end of the servo system 230 by a fastening means 1208, for example, a pivoting pin and a side-thrust washer 1206. The fastening means 1208 may be able to cleanly rotate into the secondary shaft adapter 1202. It is contemplated in this aspect that there may be multiple thrust motor assemblies 202 aligned in parallel by means of connection shafts similar to 1202. The bare end of the servo system 230 may be supported with a pivoting capability that is integrated with a second primary structure component.

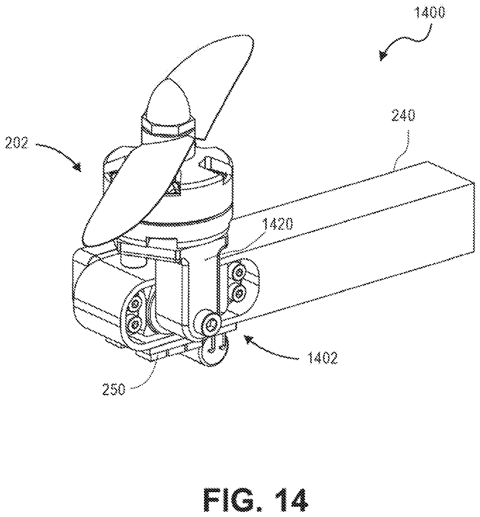

FIG. 14 illustrates a gimbaled thruster primary aircraft interface and stationary servo system 230 design, as indicated by reference numeral 1400. The aircraft structure 240 may be designed with an aerodynamic shape such that there is a reduced coefficient of drag such that the atmosphere creates a clean flight path profile and that acts as a shield to the servo system 230. A pivoting assembly 1402 acts as a pivoting interface for the servo system 230 and the thrust motor assembly 202. The pivoting assembly 1402 may include a rotatable output shaft on the servo system pivotably coupled to the servo system output arm 1420 to allow for full pivoting and rotation about the aircraft structure 240.

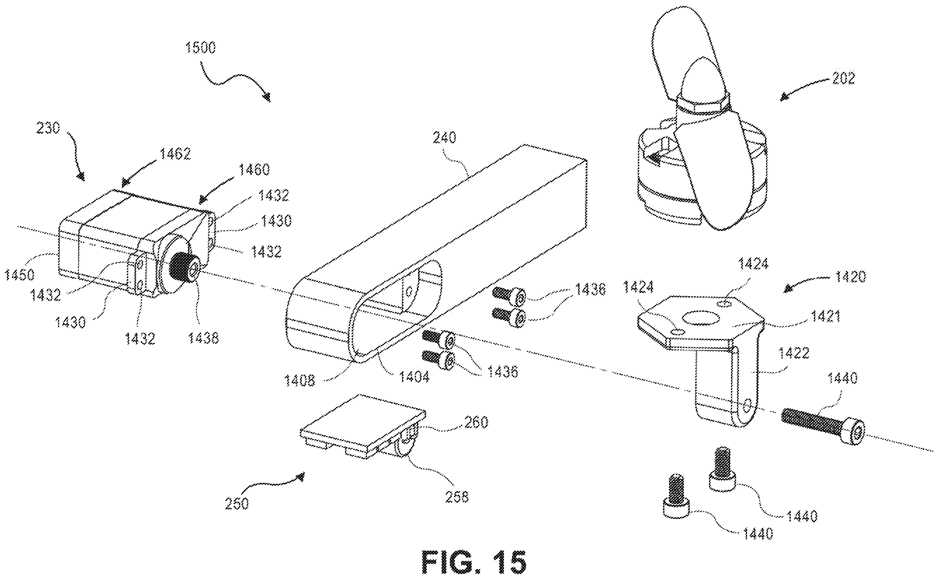

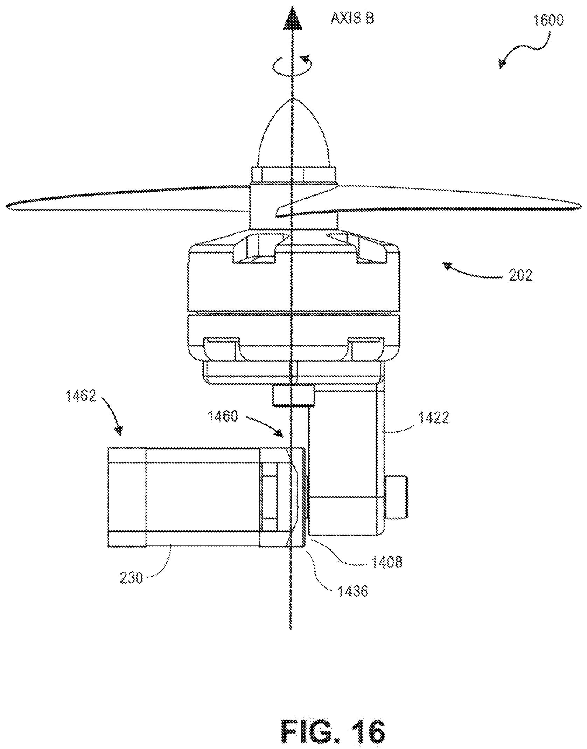

FIG. 15 illustrates an exploded view 1500 of the gimbaled thruster of FIG. 14. In one aspect, the aircraft structure 240 may contain a receptacle 1404 that is an integrated part of the aircraft structure 240. The aircraft structure 240 acts as a type of faring that may be capable of housing non-aerodynamic parts such as the servo system 230, the motor speed controller 250, and other components of the system during take-off and landing. In another aspect, it is contemplated that the servo system 230 or the motor speed controller 250 may not both be housed on the inner portion of the receptacle 1404, rather just one or the other. The aircraft structure 240 may have a rounded end. The thrust motor assembly 202 may attach to the servo system output arm 1420 that may pivotally attach the servo system 230 at a servo output shaft 1436. The servo system output arm 1420 may include a motor base plate 1421 that allows for a thrust axis (See FIG. 16) of the motor in a favorable location for absorbing moment and thrust.

The servo system output arm 1420 may include a mounting arm 1422 that attaches to the motor base plate 1421 to provide a predetermined clearance between the thrust motor assembly 202 with the servo system 230 by the pivoting assembly 1402 configuration. The servo system output arm 1420 may include bores 1424 to allow for various fasteners 1440, such as fastening bolts, pins, rivets, or the like. The pivoting assembly 1402 may be further configured such that the servo system 230 may rotate with a minimum of 115 degrees of rotation.

The servo system 230 may include at least one mounting tab 1430 configured to mount either to the receptacle inner wall 1408 and/or with fasteners 1440 to the servo system output arm 1420. The at least one mounting tab 1430 may contain bored holes 1432 for accepting servo mounting tab fasteners 1436 or other fastening components. The servo system 230 may have an upper bearing 1460 and a lower bearing 1462. These bearings may be metal or may be plastic with contact surfaces that contact one another.

The servo system 230 may also house a control circuit of the motor speed controller 250. The control circuit of the motor speed controller 250 may include a sensing unit to receive, convert, and send signals. Also the control circuit of the motor speed controller 250 may have a control loop with a motor and sensor with a potentiometer or similar sensor. The potentiometer may act like a variable resister that is configured to measure the angle of rotation and a potentiometer (a variable resistor) to measure orientation and extent of the motor rotating and tilting. The potentiometer may further sense disturbances in flight or around a target. The control circuit of the motor speed controller 250 may be configured to interpret a command signal coming from the autopilot and then translate that command signal to then control and drive the servo motor 209.

The motor speed controller 250 may be mounted on the underside of the aircraft structure 240 and, among other things, provide for powering and communicating with the servo system 230 as described above. In this aspect, the associated cable system or the wire assembly connection 258 that attaches with a stationary servo system 230 may not need as many individual wires as opposed to when the servo system 230 is configured for gimbaled rotation discussed in other aspects.

FIG. 16 illustrates a side view of the gimbaled thruster of FIGS. 13 and 14. The axis of the thrust line, represented by axis B, may be located near or at center and in close proximity to the joint of the servo output shaft 1438 and the receptacle inner wall 1408, so as to minimize extraneous torques carried across the joint. The location of the axis of thrust may be directly impacted by the servo system 230 upper bearing 1460 and a lower bearing 1462 locations. Some prior art approaches generate unfavorable torque on the bearing shaft and bearings (which would decrease the lifespan of both as they wear faster) if the thrusting line was not aligned properly. In this aspect, the mounting arm 1422 is configured such that the thrust motor assembly 202 thrust line of action, represented by Axis B, is aligned with the upper bearing 1460. This disclosure overcomes such issues with a placement of the center axis of the thrust line, represented by axis B, of the thrust motor assembly 202 to minimize extraneous torques carried across the system.

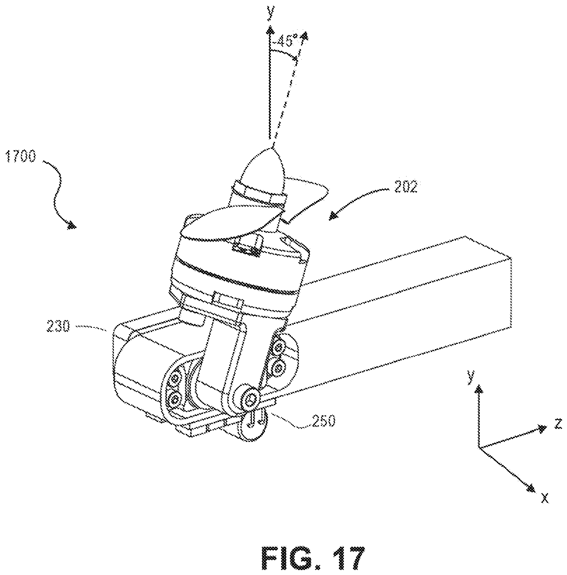

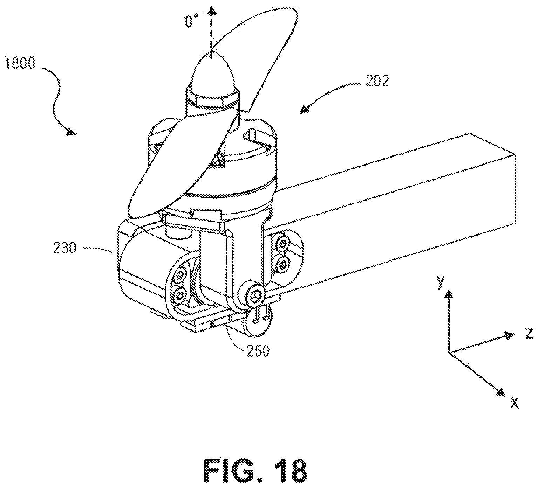

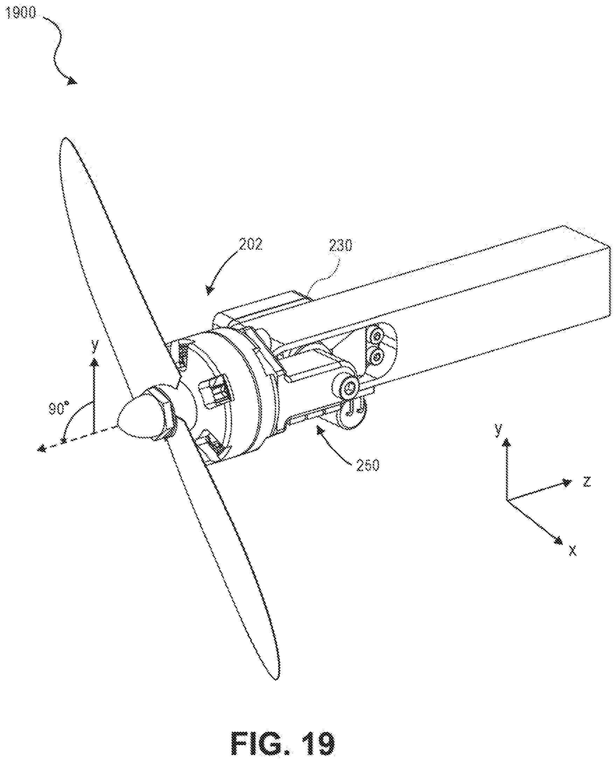

At a certain auto programmed altitude, or with pilot input, the vehicle may transition from horizontal to vertical flight mode, or vice versa. The motor can be commanded to rotate at a variable velocity that increases or decreases thrust accordingly. The autopilot control signals in the airplane may output and send a signal, for example a digital or analog signal, to the motor 209 commanding the servo system 230 to rotate through a 180 degree arc about the structure arm of the aircraft structure 240. Or the motor may be commanded to rotate at a variable velocity to increase thrust. Employing an x-y-z axis into the plane of the drawings, FIG. 17 illustrates a gimbaled thruster tilted at -45 degrees as indicated by reference numeral 1700. In this aspect, the servo can be commanded to tilt and rotate in a negative rotation arc about the structure arm of the aircraft structure 240. FIG. 18 illustrates a gimbaled thruster tilted at 0 degrees, pointing upwards as indicated by reference numeral 1800. As such, FIG. 17 and 18 illustrate orientation before flight, i.e. during take-off and vertical lift. FIG. 19 illustrates a gimbaled thruster tilted at +90 degrees, pointed forward as indicated by reference numeral 1900. This illustrates a contemplated horizontal and forward flight mode orientation fully employing a locking mechanism discussed below. Other orientations are contemplated as well.

FIG. 20 illustrates a gimbaled thruster in an operational configuration 2000 wherein a thrust motor assembly 2102 bladed component includes a high thrust and high efficiency ducted fan assembly. Such ducted fans are useful to either create a large amount of thrust with low efficiency or a low amount of thrust with high efficiency. In this aspect, the thrust motor ducted fan assembly is a high-thrust-low-efficiency assembly being connected directly or pivotally to two primary aircraft structures that provide for more rigidity and configures the aircraft in double-shear configuration. Alternatively, in another aspect with a few changes in construction, a low-thrust-high-efficiency assembly may be achieved and is contemplated by the disclosure.

The thrust motor assembly 2102 is powered and controlled by a servo system 230 and motor speed controller 250 or ESC. Further the thrust motor assembly 2102 may connect to at least two mounting assemblies, labeled as mounting assembly A and mounting assembly B, that in turn allow for both stationary and pivoting attachment to at least one primary structure arm 2120, 2154 for a novel method of flight. In this aspect, a fan assembly 2102 and adapter are directly connected to output shaft 1438 and therefore the gimbaled thruster is held or completely carried by internal servo bearings.

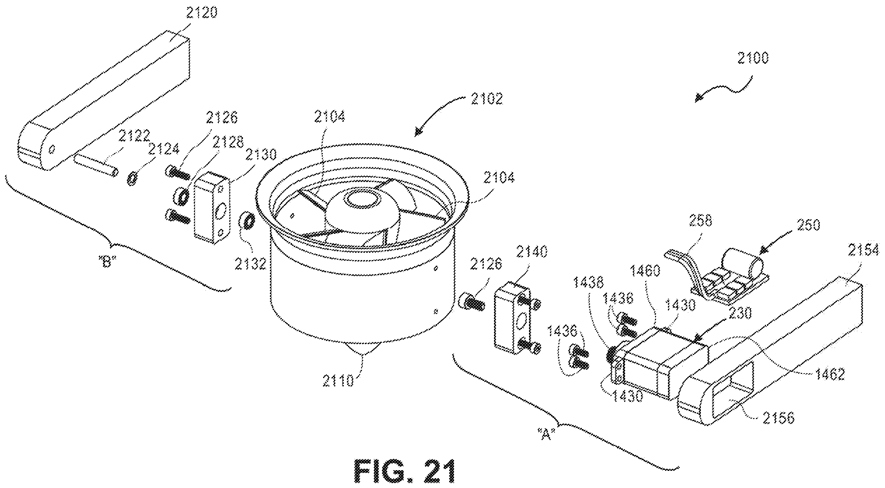

FIG. 21 illustrates an exploded view 2100 of the gimbaled thruster of FIG. 20. A thrust bladed component 2104 includes a high thrust and high efficiency ducted fan assembly. Unlike the thrust motor assembly 202, this thrust assembly with a bladed fan provides high efficiency and/or high thrust to fly at greater speeds. A fan shroud 2108 houses fan blades and is configured to increase the efficiency by encapsulating the fans. The fan shroud 2108 may be configured to be integrated with mounting assemblies, such as the illustrated mounting assembly A and mounting assembly B.

Mounting assembly A may be configured to integrate the fan shroud 2108 with both the tilting components of the servo system 230 and a primary structure arm 2154 with servo mounting receptacle 2156. The mounting assembly A may use a direct and non-pivoting construction. A tail cone 2110 may extend rearward from the base of an empennage extending upward from the ducted fan. For a direct and non-pivoting connection, the fan shroud 2108 may couple with a ducted fan servo adapter 2140. The ducted fan servo adapter 2140 may act as the connection between the fan shroud 2108 and servo system 230. The ducted fan servo adapter 2140 may include a connection means, for example at least one bored hole to accept a fastener or mounting bolt 2126 to mount with the fan shroud 2108. Alternatively, in an aspect, a connecting shaft or rod may be utilized as a connection between the fan shroud 2108, the ducted fan servo adapter 2140 and the servo so as to further allow those components to pivotally couple and rotate. In yet another aspect, the fan shroud 2108 may couple with a radial load bearing on the shaft to carry the load of the thrust motor assembly 2102. These and other aspects may utilize the internal bearings of the servo system 230 instead of adding extra bearings.

In one aspect, the primary structure arm 2154 connected with mounting assembly A may be configured as a type of faring capable of housing a mounting receptacle 2156 Such components may be the servo system 230, the motor speed controller 250, and other components of the system. In another aspect, it is contemplated that the servo system 230 or the motor speed controller 250 may not both be housed on the inner portion of the servo mounting receptacle 2156. The body of the primary aircraft structure 1254 may have a rounded forward end for use in forward flight.

In an aspect, the ESC or the motor speed controller 250 may be mounted to a stationary side of the servo system 230 via a previously discussed adhesive 242. Alternatively, the ESC or the motor speed controller 250 may be mounted on the underside of the primary structure arm 2154 by an adhesive layer capable of absorbing heat and/or conducting heat.

The ESC or the motor speed controller 250 may be configured for, among other things, powering and communicating with the servo system 230 as described above. In this aspect, the associated cable system or the wire assembly connection 258 that attaches with a stationary servo system 230 may not need as many individual wires as opposed to when the servo system 230 is capable of the gimbaled rotation discussed in another aspect.

Continuing to reference FIGS. 20 and 21, the mounting assembly B may integrate the fan shroud 2108 with a second primary structure arm 2120 through a pivot shaft adapter 2130 and a pivot shaft 2122 in order to carry a cross-plane torque. The fan shroud 2108 may fasten with a shaft adapter 2130. The shaft adapter 2130 may include a connection, for example at least one bored hole, to accept mounting bolts 2126, a pivot shaft 2122 and side thrust washer 2124, or other type fastener. This connecting shaft or rod may be configured to allow the mounting assembly B components to pivotally couple and rotate while carrying the cross-plane torque. The two bearings 2128 and 2132, or alternatively a needle bearing, brass bushing, roller bearings or the like, may be utilized to carry a cross-plane torque. In another aspect, the fan shroud 2108 may couple with a radial load bearing on the pivot shaft 2122 to carry the load of the thruster.

In another contemplated aspect, multiple propellers or blade components can be strung together in parallel with such mounting assemblies A, B, ... and N.

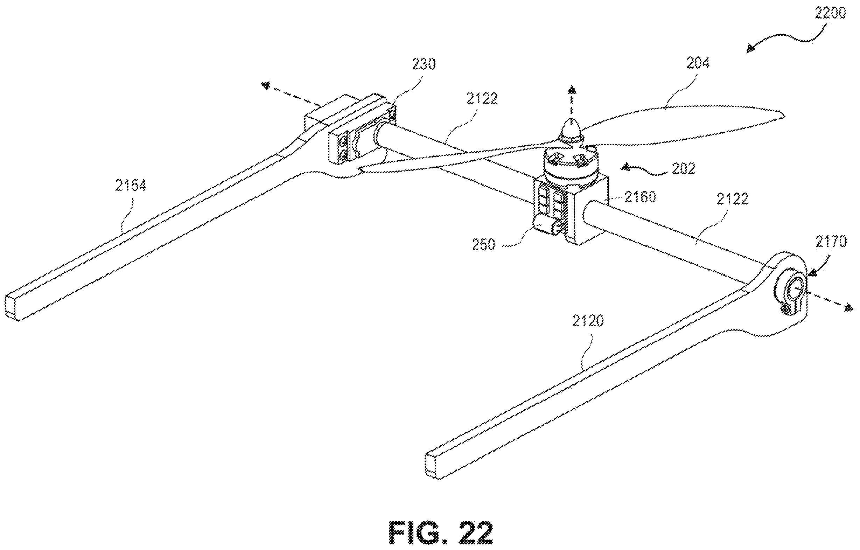

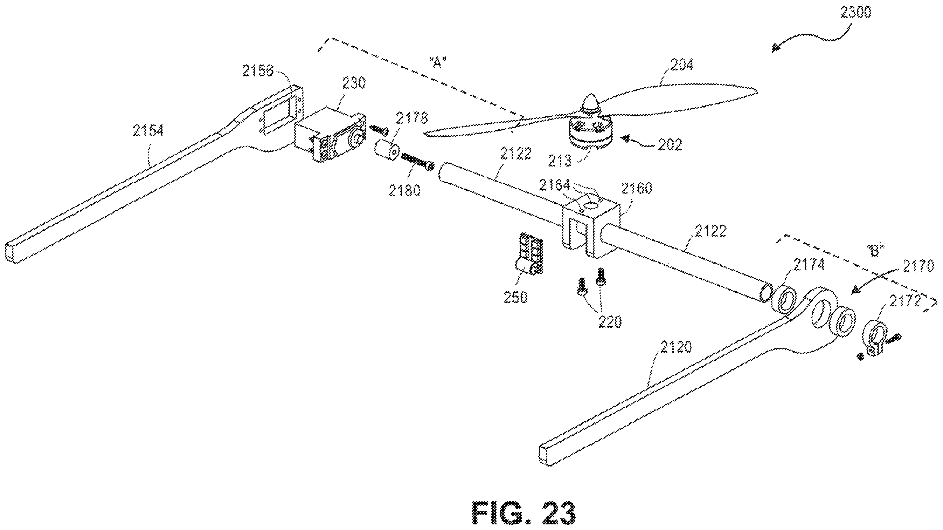

FIG. 22 illustrates a gimbaled thruster with a tilt shaft implementation connecting two primary structural arms in accordance with similar aspects of FIGS. 20 and 21. FIG. 23 illustrates an exploded view 2300 of the gimbaled thruster of FIG. 22. The connecting tilt shaft 2122 or rod may be utilized as a connection between a tilting thrust motor assembly 202 and a stationary servo system 230 so as to further allow those components to pivotally couple and rotate. Further, the tilt shaft 2122 may be sized to provide clearance between at least one propeller blade 204 on the tilting thrust motor assembly 202 and two primary structure arms 2154, 2120.

Referring to FIG. 23, the thrust motor assembly 202 and motor speed controller 250 may mount directly to a central mounting block 2160. The motor mounting block 2160 may be configured with at least one mating hole 2164, for contemplated use to accept and stabilize a motor shaft 213 of the thrust motor assembly 202. In one aspect, the motor speed controller 250 mounts directly onto the mounting block 2160. The mounting block 2160 is configured to couple with the tilt shaft 2122 via at least one mating hole 2164. The tilt shaft 2122 may connect to at least two mounting assemblies, labeled as mounting assembly A and mounting assembly B, on opposed ends of the shaft 2122 that in turn allow for both stationary and pivoting attachment to the at least one primary structure arm 2120, 2154.

In one aspect of mounting assembly A, the primary structure arm 2154 may be configured as a type of faring housing a mounting receptacle 2156. The mounting receptacle in turn shields non-aerodynamic components during take-off and landing inside. This mounting receptacle 2156 construction is the same described previously in FIGS. 20 and 21. For example, such a component housed in the mounting receptacle 2156 may be the stationary servo system 230, fastened to the arm 2154 by means of a bolt. The output shaft 1438 of the servo system 230 may utilize an adapter 2178 to rigidly attach to the aft end of the tilt shaft 2154.

In one aspect of mounting assembly B, an aft end of the tilt shaft 2122 may couple with a second primary structure arm 2120 through a fastening means 2170 acting to prevent the tilt shaft 2122 from lateral displacement. The fastening means may include a ring 2174 that press-fits or glues to the tilt shaft 2122 and clamp 2172 that fits snugly around an aft end of the shaft 2122. The clamp 2172 and ring 2174 assembly further prevent the tilt shaft 2122 from sliding out of a bearing 2174 as the bearing 2174 supports the rotation of the tilt shaft 2122.

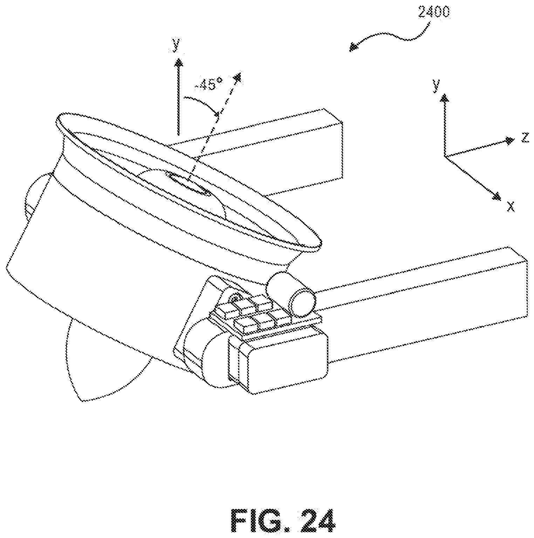

FIGS. 24, 25, and 26 illustrate opposed titling about an axis line of the gimbaled thruster of FIG. 20 in accordance with aspects of the present disclosure. Connecting the servo system 230 directly to the thrust motor assembly 2102 may afford a desired optimal range of motion in various contemplated flight modes. At a certain auto programmed altitude, or with pilot input, the vehicle may transition from the horizontal flight mode to the vertical flight mode, or vice versa. The motor of the thrust motor assembly 2102 can be commanded to rotate at a variable velocity that increases or decreases thrust accordingly. The autopilot control signals in the airplane may output and send a signal, for example a digital or analog signal, to the servo motor commanding the servo system 230 to rotate through a 180 degree arc about the primary structure arms 2120, 2154. Or the motor may be commanded to rotate at a variable velocity to increase thrust.

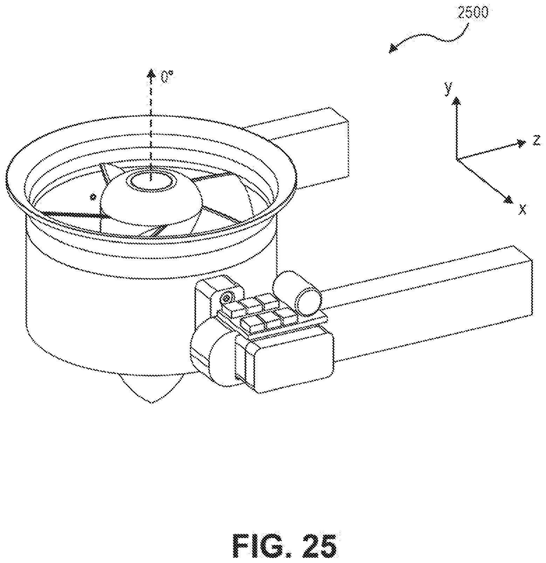

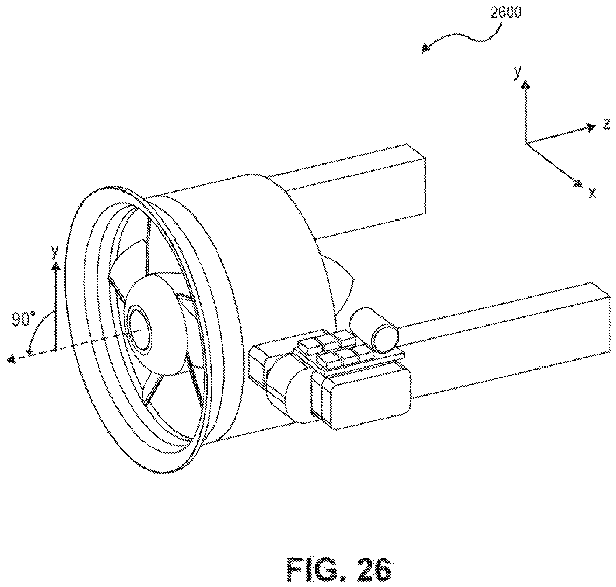

Employing an x-y-z axis into the plane of the drawings, FIG. 24 and 25 illustrate a gimbaled thruster tilted at -45 degrees and 0 degrees pointing upward, respectively. As such, FIG. 24 and 25 illustrate orientation before flight, i.e. during take-off and vertical lift. FIG. 26 illustrates a gimbaled thruster tilted at +90 degrees, pointed forward as indicated by reference numeral 2600. This illustrates a contemplated horizontal and forward flight mode orientation other orientations are contemplated as well.

Referencing FIGS. 1-26, it is contemplated in one aspect (not pictured) that there are a plurality of thrust motor assemblies 202 all capable of rotation and opposed tilting about an axis line of the gimbaled thruster. In another aspect (not pictured), it is contemplated there be one or more thrust motor assemblies 202 capable of rotating and opposed tilting, and one or more stationary thrust motor assemblies 202 not capable of rotation and opposed titling. In another aspect (not pictured), it is contemplated there be two thrust motor assemblies 202 capable of rotating and opposed tilting, and one stationary thrust motor assembly 202 not capable of rotation and opposed titling. One benefit of this configuration is during transition to flight mode, it may be easier to implement and maintain the tail motor stable during the transition. Another benefit of one stationary thrust motor assembly 202 is fewer moving parts and/or fewer numbers of propellers 204. In yet another aspect (not pictured), it is contemplated there be one thrust motor assemblies 202 capable of rotating and opposed tilting, and two stationary thrust motor assembly 202 not capable of rotation and opposed tilting.

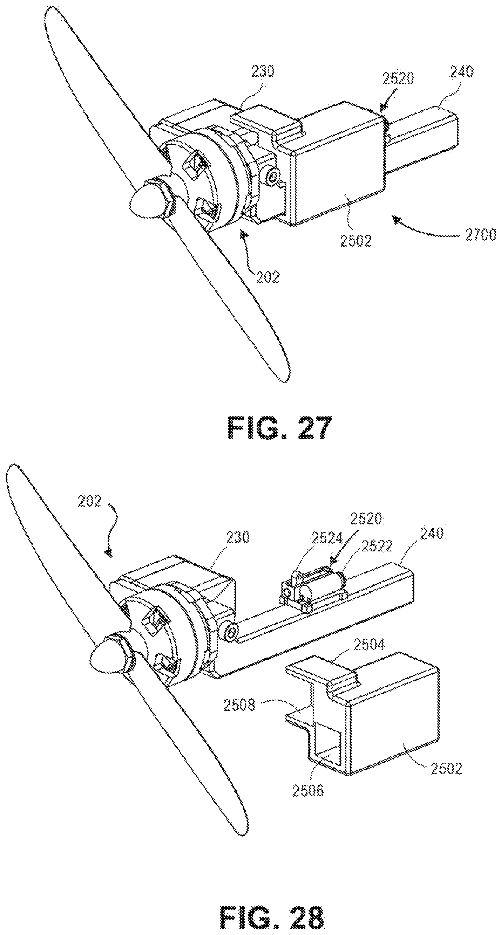

FIGS. 27, 28, 29 and 30 illustrate a tilt locking mechanism configured to slidably couple with the above referenced structure arm of FIGS. 1-26. The contemplated tilt locking mechanism 2500 structure may be configured to, and supported by, any previously discussed primary aircraft structure arm 240. The locking mechanism 2700 may be further configured to both prevent gimbaling during flight and reduce stress on one or more of the following components: the servo system 230, thrust motor assembly 202, and adapter plate (not pictured).

In one aspect, the tilt locking mechanism 2700 may include a receptacle 2506 configured to allow a latching block 2502 to slide along a sliding path 2530 on the arm of the aircraft structure 240 between a locked position and unlocked position. This is what is referenced, but not limited by, in the above paragraph as "slidably couple." For example, in an aspect, a latching block 2502 may slide in a linear forward and backward motion along a predetermined sliding path 2530 between a first "locked" position and a second "unlocked" position.

The tilt-locking mechanism 2700 may move from a locked to unlocked position along the arm of the aircraft structure 240 by an electro-mechanical device. In one aspect, a linear servo 2520 may mount on the arm of the aircraft structure 240 so to pull and retract, thus controlling the forward and backward movement of the latching block 2502. The linear servo may include a motor and gears 2522 that further function to activate and release a control horn 2524. As the servo pulls the block to one position or the next, the horn 2524 locks with or releases movement of a latching block 2502. To detect how far the horn 2524 has slid, a circuit board may run a control loop that includes a linear resister for such detection.

In order to constrain certain components on the tilting part of the vehicle from translating during flight, the latching block 2502 may include at least one latching block arm 2504. The at least one arm 2504 may further be configured to form a latching interface 2508 with one or more of the following components: the servo system 230, thrust motor assembly 202, and adapter plate (not pictured). The latching block 2502 first position constrains or locks in place one or more of the following components: the servo system 230, thrust motor assembly 202, and adapter plate (not pictured). The latching block second position allows the named components to freely rotate, tilt, or gimbal.

While aspects of the present disclosure have been particularly shown and described with reference to the aspects above, it will be understood by those skilled in the art that various additional aspects may be contemplated by the modification of the disclosed machines, systems and methods without departing from the scope of what is disclosed. Such aspects should be understood to fall within the scope of the present disclosure as determined based upon the claims.

## Claims

1. A vectored thrust control module (100) for an aircraft having an aircraft structure comprising:
a servo system (230) that includes an electric motor and an output shaft (234), wherein the output shaft (234) is coupled to an interface adapter (236) at a joint (310), the interface adapter (236) is configured to provide a connection point with the aircraft structure , and the servo system (230) is operated by electrical power and configured to receive commands to provide a degree of rotation of tilt during flight;
a bladed component (204) configured to rotate and provide thrust; and
a thrust motor assembly (202) that includes a motor (209) configured to rotate the bladed component (204),
wherein the thrust motor assembly (202) is fully supported by the servo system (230);
wherein the thrust motor assembly (202) and the servo system (230) are rigidly connected together and are further configured to rotate together with respect to the aircraft structure;
wherein the bladed component (204) and the thrust motor assembly (230) are configured to generate a line of thrust; and
wherein a center of the line of thrust always extends through the joint (310) of the interface adapter (236) and the output shaft (234).

2. The vectored thrust control module according to claim 1, further comprising an electronic speed control unit mounted to one of the following: a frame component configured to be attached to the aircraft structure or the servo system, and the electronic speed control unit further powers the servo system via an integrated power conditioning circuit.

3. The vectored thrust control module according to claim 2, wherein the integrated power conditioning circuit is a separate component from the electronic speed control unit.

4. The vectored thrust control module according to claim 1, further comprising an adapter plate (216) configured to be fastened to a motor base assembly (211) of the thrust motor assembly (202) and the servo system (320) is configured to be directly coupled to the adapter plate (216).

5. The vectored thrust control module according to claim 1, wherein the interface adapter (236) comprises a countersunk hole configured to accept the output shaft (234) of the servo system (230).

6. The vectored thrust control module according to claim 1 wherein the servo system is encased by a servo housing, and further wherein the servo housing is integrated with, or is configured as an adapter plate configured to be fastened to a motor base assembly (211) of the thrust motor assembly (202).

7. The vectored thrust control module according to claim 1, wherein the thrust motor assembly is configured to rotate with respect to the aircraft structure.

8. The vectored thrust control module according to claim 1, wherein the servo system is configured to rotate with respect to the aircraft structure.

9. The vectored thrust control module according to claim 1, wherein the bladed component comprises a propeller or a fan structure.

10. The vectored thrust control module according to claim 1, wherein the interface adapter is configured to provide clearance for the bladed component.

11. The vectored thrust control module according to claim 1, further comprising an adhesive that connects an adapter plate to the servo system (230) and the adapter plate is fastened to a motor base assembly (211) of the thrust motor assembly, and further wherein the adhesive absorbs heat from the thrust motor assembly or a speed controller.

12. The vectored thrust control module according to claim 1 further comprising a bolt and bolt shaft retained in a frame member to absorb extraneous torques.

13. The vectored thrust control module according to claim 1, further comprising a locking mechanism configured to be coupled to an interface portion of the aircraft structure, the locking mechanism further comprising:
a latching block with a receptacle, the receptacle configured to receive and slide along a structure arm; and
a linear servo assembly mounted to the structure arm, configured to move the latching block,
wherein the locking mechanism prevents gimbaling of any of the following components: the thrust motor assembly, the servo system, and an adapter plate.

14. The vectored thrust control module according to claim 1, further comprising an adapter plate fastened to a motor base assembly (211) of the thrust motor assembly and the servo system is directly coupled to the adapter plate,
wherein the thrust motor assembly is configured to rotate with respect to the aircraft structure.

## Patentansprüche

1. Vektorgesteuertes Schubregelungsmodul (100) für ein Luftfahrzeug, das eine Luftfahrzeugstruktur aufweist, Folgendes umfassend:
ein Servosystem (230), das einen Elektromotor und eine Abtriebswelle (234) einschließt, wobei die Abtriebswelle (234) an einer Verbindungsstelle (310) mit einem Schnittstellenadapter (236) gekoppelt ist, wobei der Schnittstellenadapter (236) dafür konfiguriert ist, einen Verbindungspunkt mit der Luftfahrzeugstruktur bereitzustellen, und das Servosystem (230) durch Elektroenergie betrieben wird und dafür konfiguriert ist, Befehle zu empfangen, um während des Fluges einen Grad von Neigungsdrehung bereitzustellen;
eine mit Blättern versehene Komponente (204), die dafür konfiguriert ist, sich zu drehen und Schub bereitzustellen; und
eine Schubmotor-Baugruppe (202), die einen Motor (209) einschließt, der dafür konfiguriert ist, die mit Blättern versehene Komponente (204) zu drehen,
wobei die Schubmotor-Baugruppe (202) vollständig durch das Servosystem (230) unterstützt wird;
wobei die Schubmotor-Baugruppe (202) und das Servosystem (230) starr miteinander verbunden sind und ferner dafür konfiguriert sind, sich zusammen in Bezug auf die Luftfahrzeugstruktur zu drehen;
wobei die mit Blättern versehene Komponente (204) und die Schubmotor-Baugruppe (230) dafür konfiguriert sind, eine Schublinie zu erzeugen; und
wobei sich eine Mitte der Schublinie immer durch die Verbindungsstelle (310) des Schnittstellenadapters (236) und der Abtriebswelle (234) erstreckt.

2. Vektorgesteuertes Schubregelungsmodul nach Anspruch 1, das ferner eine elektronische Geschwindigkeitsregelungseinheit umfasst, die an einem von Folgendem montiert ist: einer Rahmenkomponente, die dafür konfiguriert ist, an der Luftfahrzeugstruktur angebracht zu werden, oder dem Servosystem, und wobei die elektronische Geschwindigkeitsregelungseinheit ferner das Servosystem über eine integrierte Leistungsanpassungsschaltung speist.

3. Vektorgesteuertes Schubregelungsmodul nach Anspruch 2, wobei die integrierte Leistungsanpassungsschaltung eine von der elektronischen Geschwindigkeitsregelungseinheit gesonderte Komponente ist.

4. Vektorgesteuertes Schubregelungsmodul nach Anspruch 1, das ferner eine Adapterplatte (216) umfasst, die dafür konfiguriert ist, an einer Motorbasis-Baugruppe (211) der Schubmotor-Baugruppe (202) befestigt zu werden, und wobei das Servosystem (320) dafür konfiguriert ist, unmittelbar mit der Adapterplatte (216) gekoppelt zu werden.

5. Vektorgesteuertes Schubregelungsmodul nach Anspruch 1, wobei der Schnittstellenadapter (236) ein Senkloch umfasst, das dafür konfiguriert ist, die Abtriebswelle (234) des Servosystems (230) aufzunehmen.

6. Vektorgesteuertes Schubregelungsmodul nach Anspruch 1, wobei das Servosystem von einem Servogehäuse ummantelt ist, und ferner wobei das Servogehäuse mit einer Adapterplatte integriert ist oder als eine solche konfiguriert ist, die dafür konfiguriert ist, an einer Motorbasis-Baugruppe (211) der Schubmotor-Baugruppe (202) befestigt zu werden.

7. Vektorgesteuertes Schubregelungsmodul nach Anspruch 1, wobei die Schubmotor-Baugruppe dafür konfiguriert ist, sich in Bezug auf die Luftfahrzeugstruktur zu drehen.

8. Vektorgesteuertes Schubregelungsmodul nach Anspruch 1, wobei das Servosystem dafür konfiguriert ist, sich in Bezug auf die Luftfahrzeugstruktur zu drehen.

9. Vektorgesteuertes Schubregelungsmodul nach Anspruch 1, wobei die mit Blättern versehene Komponente einen Propeller oder eine Gebläsestruktur umfasst.

10. Vektorgesteuertes Schubregelungsmodul nach Anspruch 1, wobei der Schnittstellenadapter dafür konfiguriert ist, einen Spielraum für die mit Blättern versehene Komponente bereitzustellen.

11. Vektorgesteuertes Schubregelungsmodul nach Anspruch 1, das ferner einen Klebstoff umfasst, der eine Adapterplatte mit dem Servosystem (230) verbindet, und die Adapterplatte ist an einer Motorbasis-Baugruppe (211) der Schubmotor-Baugruppe befestigt, und ferner wobei der Klebstoff Wärme von der Schubmotor-Baugruppe oder einem Geschwindigkeitsregler absorbiert.

12. Vektorgesteuertes Schubregelungsmodul nach Anspruch 1, das ferner einen Bolzen und einen Bolzenschaft, der in einem Rahmenelement festgehalten wird, um äußere Drehmomente zu absorbieren, umfasst.

13. Vektorgesteuertes Schubregelungsmodul nach Anspruch 1, das ferner einen Arretierungsmechanismus umfasst, der dafür konfiguriert ist, an einen Schnittstellenabschnitt der Luftfahrzeugstruktur gekoppelt zu werden, wobei der Arretierungsmechanismus ferner Folgendes umfasst:
einen Verriegelungsblock mit einer Aufnahme, wobei die Aufnahme dafür konfiguriert ist, einen Strukturarm aufzunehmen und entlang desselben zu gleiten; und
eine lineare Servobaugruppe, die an dem Strukturarm montiert ist, dafür konfiguriert, den Verriegelungsblock zu bewegen,
wobei der Arretierungsmechanismus ein kardanisches Schwenken einer beliebigen der folgenden Komponenten verhindert: der Schubmotor-Baugruppe, des Servosystems und einer Adapterplatte.

14. Vektorgesteuertes Schubregelungsmodul nach Anspruch 1, das ferner eine Adapterplatte umfasst, die an einer Motorbasis-Baugruppe (211) der Schubmotor-Baugruppe befestigt ist, und das Servosystem ist unmittelbar an die Adapterplatte gekoppelt,
wobei die Schubmotor-Baugruppe dafür konfiguriert ist, sich in Bezug auf die Luftfahrzeugstruktur zu drehen.

## Revendications

1. Module de commande de poussée vectorielle (100) destiné à un aéronef présentant une structure d'aéronef, comprenant :
un système asservi (230) qui inclut un moteur électrique et un arbre de sortie (234), dans lequel l'arbre de sortie (234) est couplé à un adaptateur d'interface (236) au niveau d'un joint (310), l'adaptateur d'interface (236) étant configuré pour fournir un point de raccordement avec la structure d'aéronef, et le système asservi (230) fonctionne à l'électricité et est configuré pour recevoir des commandes pour fournir un certain degré de rotation d'inclinaison en vol ;
un composant à pale (204) configuré pour tourner et fournir une poussée ; et
un ensemble moteur de poussée (202) qui inclut un moteur (209) configuré pour faire tourner le composant à pale (204),
dans lequel l'ensemble moteur de poussée (202) est totalement supporté par le système asservi (230) ;
dans lequel l'ensemble moteur de poussée (202) et le système asservi (230) sont connectés l'un à l'autre de manière rigide et configurés en outre pour tourner conjointement par rapport à la structure d'aéronef ;
dans lequel le composant à pale (204) et l'ensemble moteur de poussée (230) sont configurés pour générer une ligne de poussée ; et
dans lequel un centre de la ligne de poussée s'étend toujours à travers le joint (310) de l'adaptateur d'interface (236) et l'arbre de sortie (234).

2. Module de commande de poussée vectorielle selon la revendication 1, comprenant en outre une unité de commande de vitesse électronique montée sur un parmi : un composant de cadre configuré pour être fixé à la structure d'aéronef ou au système asservi, et l'unité de commande de vitesse électronique permet en outre le fonctionnement du système asservi par l'intermédiaire d'un circuit conditionneur électrique intégré.

3. Module de commande de poussée vectorielle selon la revendication 2, dans lequel le circuit conditionneur électrique intégré est un composant distinct par rapport à l'unité de commande de vitesse électronique.

4. Module de commande de poussée vectorielle selon la revendication 1, comprenant en outre une plaque d'adaptation (216) configurée pour être fixée à un ensemble d'embase moteur (211) de l'ensemble moteur de poussée (202) et le système asservi (320) est configuré pour être directement couplé à la plaque d'adaptation (216).

5. Module de commande de poussée vectorielle selon la revendication 1, dans lequel l'adaptateur d'interface (236) comprend une fraisure configurée pour recevoir l'arbre de sortie (234) du système asservi (230).

6. Module de commande de poussée vectorielle selon la revendication 1, dans lequel le système asservi est renfermé dans un servo-boîtier, et dans lequel en outre le servo-boîtier est intégré à une plaque d'adaptation ou configuré sous la forme d'une plaque d'adaptation configurée pour être fixée à un ensemble d'embase moteur (211) de l'ensemble moteur de poussée (202).

7. Module de commande de poussée vectorielle selon la revendication 1, dans lequel l'ensemble moteur de poussée est configuré pour tourner par rapport à la structure d'aéronef.

8. Module de commande de poussée vectorielle selon la revendication 1, dans lequel le système asservi est configuré pour tourner par rapport à la structure d'aéronef.

9. Module de commande de poussée vectorielle selon la revendication 1, dans lequel le composant à pale comprend une hélice ou une structure de ventilateur.

10. Module de commande de poussée vectorielle selon la revendication 1, dans lequel l'adaptateur d'interface est configuré pour fournir un écartement pour le composant à pale.

11. Module de commande de poussée vectorielle selon la revendication 1, comprenant en outre un adhésif reliant une plaque d'adaptation au système asservi (230) et la plaque d'adaptation est fixée à un ensemble d'embase moteur (211) de l'ensemble moteur de poussée, et dans lequel en outre l'adhésif absorbe la chaleur provenant de l'ensemble moteur de poussée ou d'un dispositif de commande de vitesse.

12. Module de commande de poussée vectorielle selon la revendication 1, comprenant en outre un boulon et une tige de boulon retenue dans un élément de cadre pour absorber des couples externes.

13. Module de commande de poussée vectorielle selon la revendication 1, comprenant en outre un mécanisme de verrouillage configuré pour être couplé à une partie d'interface de la structure d'aéronef, le mécanisme de verrouillage comprenant en outre :
un bloc de verrouillage avec une prise, la prise étant configurée pour recevoir un bras de structure et coulisser sur celui-ci ; et
un ensemble asservi linéaire monté sur le bras de structure, configuré pour déplacer le bloc de verrouillage,
ledit mécanisme de verrouillage empêchant la suspension à la Cardan de tout composant parmi les suivants : l'ensemble moteur de poussée, le système asservi et une plaque d'adaptation.

14. Module de commande de poussée vectorielle selon la revendication 1, comprenant en outre une plaque d'adaptation fixée à un ensemble d'embase moteur (211) de l'ensemble moteur de poussée et le système asservi est directement couplé à la plaque d'adaptation,
dans lequel l'ensemble moteur de poussée étant configuré pour tourner par rapport à la structure d'aéronef.
